# EUROPEAN PATENT SPECIFICATION

(11) **EP 1 629 974 B1**
(45) Date of publication and mention of the grant of the patent: **03.10.2007**
(21) Application number: 05017367.3
(22) Date of filing: 10.08.2005
(51) Int. Cl.: B32B 27/32, A61J 1/00, B65D 81/32

(54) **Medical multi-layered container and plural chamber container**
Mehrlagige medizinische Folie und Mehrkammerbehälter
Film médical multicouche et récipient a plusieurs compartiments

(30) Priority: 16.08.2004 JP 2004236395
(43) Date of publication of application: 01.03.2006
(73) Proprietor: NIPRO CORPORATION, Kita-ku, Osaka-shi, Osaka-fu, 531-8510 (JP)
(72) Inventor: Omori, Kenji, Kita-ku Osaka-shi Osaka-fu, 531-8510 (JP); Honda, Minoru, Kita-ku Osaka-shi Osaka-fu, 531-8510 (JP); Iwaike, Makoto, Kita-ku Osaka-shi Osaka-fu, 531-8510 (JP); Moteki, Masashi, Kita-ku Osaka-shi Osaka-fu, 531-8510 (JP)
(74) Representative: Albrecht, Thomas

(56) References cited:
- EP-A- 1 602 350
- WO-A-01/68029

## Description

### BACKGROUND OF THE INVENTION

The present invention relates to a multi-layered medical container and a multi-layered medical plural chamber container and, in particular, relates to a multi-layered medical container and multi-layered medical plural chamber container which suppress elution of components from the container and from an adhesion layer.

Conventionally, as a container for storing a medicament, a container which is formed from a linear polyolefin monolayer film or a multi-layered film containing the linear polyolefin layer, a polymer having a moisture or a gas barrier property, has been widely used. Further, in recent years, an application of the multi-layered film in which these films are bonded with each other by an adhesive has been approved in a medical field by a revised Japan Pharmacopoeia, and, thus, medical containers with a number of properties have been developed. Accordingly, it has become possible to contain various types of medicaments in such containers.

However, owing to enhancement of properties of the container and capability of containing various types of medicaments, such problems as a decrease of medicament content, an increase of an analogous substance of medicament, an increase of turbidity of a medicinal liquid and an increase of an insoluble particulate are caused by an interaction between impurities such as a low molecular weight component eluted from the linear polyolefin or a component eluted from the adhesion layer; and the medicament which is an active ingredient.

Under these circumstances, various types of plastic products have been proposed as materials for medical use in which a container is not deformed by sterilization, the medicament is not denatured by eluting of an impurity or absorbing of an active ingredient and transparency is not deteriorated by steam sterilization.

Among these products, a thermoplastic norbornene resin, that is, a cyclic polyolefin, is used as a raw material for medical products (JP-A 4-276253, JP-A 6-255053, JP-A 7-266517, JP-A 10-59345, US6,042,906 and JP-A 2002-301796).

As for the medical containers, although containers subjected to a high-pressure sterilization or a high-temperature sterilization such as a hot-water sterilization are described in these prior art, it has not been studied whether these containers can be irradiated by γ-rays. Further, it has not yet been studied whether plural chamber containers can be subjected to the γ-ray sterilization, in which a solid medicament and a liquid medicament are respectively stored and both of them are mixed with each other at the time of being used. Particularly, in the plural chamber container, when an objective medicament is prepared from the solid medicament, which has been stored for a long time, and the medical liquid, it is important to study an alteration of the medicament, a change of turbidity of the thus-prepared medicament, an appearance change of the container by sterilization with γ-ray irradiation, and the like.

European Patent Application EP-A-1602350 claims priority of 12 March 2004 and discloses a multilayered plural chamber medical container comprising a film comprising a cyclic polyolefin or a blend thereof.

The object of the present invention is to provide a multi-layered medical container and a multi-layered medical plural chamber container, which mainly use a cyclic polyolefin and are capable of being subjected to a γ-ray sterilization, while reducing a low molecular weight component and an adhesion layer component eluted from the multi-layered container, and thus, to solve problems, for example, a decrease of a medicament content, an increase of an analogous substance, an increase of turbidity of a medicament and an increase of an insoluble particulate generated by an interaction between these components and the medicament. The containers further show medicament stability.

### SUMMARY OF THE INVENTION

The present invention relates to a multi-layered medical container comprising a body and a port, the body being formed by a multi-layered film having a first layer comprising a cyclic polyolefin or a polymer blend containing the cyclic polyolefin and a second layer, adhered to the former layer, comprising a linear polyolefin or a polyamide, as well as a further layer comprising a gas barrier layer and/or a printable layer on the second layer.

The present invention further relates to a multi-layered medical plural chamber container comprising a body and a discharge port, the body being divided by a peelable seal portion in a fluid-tight manner into a medical liquid-containing chamber that stores a medical liquid and a medicament-containing chamber that stores a medicament, wherein the medicament-containing chamber is a bag-shape article constituted by a front sheet and a rear sheet, and wherein the front sheet and/or the rear sheet are constituted by a multi-layered film having a first layer comprising a cyclic polyolefin or a polymer blend containing the cyclic polyolefin and a second layer, adhered to the former layer, comprising a linear polyolefin or a polyamide, as well as a further layer comprising a gas barrier layer and/or a printable layer on the second layer.

The present invention further relates to a multi-layered medical plural chamber container comprising a body and a discharge port, the body being divided by a peelable seal portion in a fluid-tight manner into a medical liquid-containing chamber that stores a medical liquid and a medicament-containing chamber that stores a medicament, wherein the medicament-containing chamber is a bag-shape article constituted by a front sheet and a rear sheet wherein the front sheet of the medicament-containing chamber is constituted by a multi-layered film in which (i) a layer comprising a cyclic polyolefin or a polymer blend containing the cyclic polyolefin, (ii) a layer, which is adhered to the layer (i), comprising a linear polyolefin or a polyamide, (iii) a polyester layer or a polyester layer comprising an inorganic-material deposited thin film and (iv) a linear polyolefin layer are laminated in this order.

The present invention still further relates to a multi-layered medical plural chamber container comprising a body and a discharge port, the body being divided by a peelable seal portion in a fluid-tight manner into a medical liquid-containing chamber that stores a medical liquid and a medicament-containing chamber that stores a medicament, wherein the medicament-containing chamber is a bag-shape article constituted by a front sheet and a rear sheet wherein the rear sheet of the medicament-containing chamber is constituted by a multi-layered film in which (i) a layer comprising a cyclic polyolefin or a polymer blend containing the cyclic polyolefin, (ii) a layer, which is adhered to the layer (i), comprising a linear polyolefin or a polyamide, (v) a metal foil, a metal deposited layer or an inorganic-material deposited layer and (vi) a polyester layer are laminated in this order.

The present invention even still further relates to a multi-layered medical plural chamber container comprising a body and a discharge port, the body being divided into a medical liquid-containing chamber that stores a medical liquid and a medicament-containing chamber that stores a medicament by a peelable seal portion in a fluid-tight manner, wherein the medicament-containing chamber is a bag-shape article constituted by a front sheet and a rear sheet wherein the front sheet of the medicament-containing chamber is constituted by a multi-layered film in which (i) a layer comprising a cyclic polyolefin or a polymer blend containing the cyclic polyolefin, (ii) a layer, which is adhered to the layer (i), comprising a linear polyolefin or a polyamide, (iii) a polyester layer or a polyester layer comprising an inorganic-material deposited thin film and (iv) a linear polyolefin layer are laminated in this order and the rear sheet of the medicament-containing chamber is constituted by a multi-layered film in which (i) a layer comprising a cyclic polyolefin or a polymer blend containing the cyclic polyolefin, (ii) a layer, which is adhered to the layer (i), comprising a linear polyolefin or a polyamide, (v) a metal foil, a metal deposited layer or an inorganic-material deposited layer and (vi) a polyester layer are laminated in this order.

In the present invention, elution of a component with a low molecular weight and of an adhesive component from these multi-layered containers is reduced by allowing a multi-layered film having a layer comprising a cyclic polyolefin or a polymer blend containing the cyclic polyolefin and a layer, adhered to the former layer, comprising a linear polyolefin or a polyamide to be a material of a container and, further, by allowing the layer comprising the cyclic polyolefin to be an innermost layer. Further, such problems as a decrease of a medicament content, an increase of an analogous substance, increase of turbidity in the medicament and an increase of an insoluble particulates caused by an interaction with these components and the medicament are solved and, thus, it becomes possible to provide a multi-layered medical container showing medicament stability. Moreover, in the present invention, there is an effect such that a γ-ray sterilization can be performed in place of a steam sterilization and, still further, in the plural chamber container, when an objective medicament is prepared from a solid medicament stored for a long time period and a medical liquid, it becomes possible to reduce an alteration of the medicament, a change of the turbidity in the thus-prepared medicament, an appearance change of the container by the γ-ray sterilization and the like.

Even still further, in the present invention, because the multi-layer comprises the cyclic polyolefin as an innermost layer, it becomes possible to form a weak seal portion by thermally bonding the medicament-containing chamber and the medical liquid-containing chamber with each other and, then, at the time of use, to peel the weak seal portion and allow the medicament and the medical liquid to be mixed with each other to obtain an objective medicament and, thereafter, to discharge the thus-obtained medicament from the discharge port.

### Brief Description of the Drawings

FIG. 1 is a cross-sectional view showing a multi-layered plural chamber container of the invention.

FIG. 2 is front elevational view showing a multi-layered plural chamber container of the invention.

FIG. 3 is a cross-sectional view showing a multi-layered film (front sheet) constituting a multi-layered container of the invention.

FIG. 4 is a cross-sectional view showing a multi-layered film (rear sheet) constituting a multi-layered container of the invention.

### Detailed Description of the Invention

In the present invention, the term "multi-layered medical container" as used herein means a multi-layered container which has a plurality of layers of films or sheets (hereinafter, referred to also as "film" inclusive of sheet), can have various types of shapes such as a bag-shape article, a bottle, a tube, a cell and a pre-filled syringe and can contain one or more medicaments. At least one layer among the plural films comprises a cyclic polyolefin or a polymer blend containing the cyclic polyolefin as a substrate.

Further, in the present invention, the term "multi-layered medical plural chamber container" as used herein means a container which has one or more chambers that stores medical liquids and one or more chambers that stores medicaments and, then, at the time of an application, allows the medical liquid or liquids and the medicament or medicaments to be mixed with each other to obtain a blended medicament. The multi-layered medical plural chamber container is a container formed with one type or a plurality of films which are similar to those in the multi-layered medical container, and can have various shapes such as a bag-shape article, a bottle and a pre-filled syringe. Also, at least one layer among the plural films comprises a cyclic polyolefin or a polymer blend containing the cyclic polyolefin as a substrate.

In the multi-layered container, in accordance with purposes of application, a discharge port such as a medicament outlet portion is provided in one of two chambers.

In the present invention, the term "gas barrier layer" as used herein means a layer which has a property to block passage of moisture or a gas. Further, in the present invention, the term "printable layer" as used herein means a layer which can be printed by a medium such as a printing ink when a letter or a picture is shown on a container surface.

In the present invention, the term "easy-peel function" as used herein means a function capable of easily peeling at the time of medicament preparation a laminated portion of films which form the container and are bonded with each other.

In the present invention, the term "adhesion layer" as used herein means a layer of an adhesive resin or an adhesive which allows a layer containing the cyclic polyolefin and other layer to be bonded with each other, or allow the other types of layers to be bonded with each other.

The cyclic polyolefin in the present invention is a thermoplastic saturated norbornene polymer which is known (for example, as disclosed in JP-A 4-276253, JP-A 5-317411 and JP-A 8-155007). As a specific example thereof, a polymer having a structural unit as represented by Chemical 1 and/or Chemical 2 can be included.

[Chemical 1]

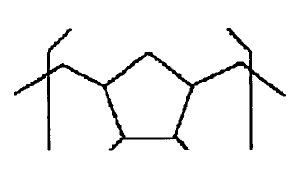

In the formula, R₁ and R₂ each represent a hydrogen atom or a hydrocarbon residue having from 1 to 10 carbon atoms, in which R₁ and R₂ may be the same or different and, further, R₁ and R₂ may form a ring with each other; and n represents a positive integer.

[Chemical 2]

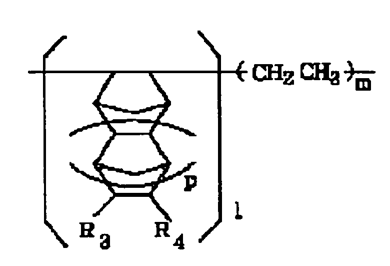

In the formula, R₃ and R₄ each represent a hydrogen atom or a hydrocarbon residue having from 1 to 5 carbon atoms, in which R₃ and R₄ may be the same or different and, further, R₃ and R₄ may form a ring with each other; l and m each represent a positive integer; and p represents 0 or a positive integer.)

The polymer having a structural unit as represented by Chemical 1 is a saturated polymer which is produced from an open-ring polymer such that the open-ring polymer obtained by polymerizing a monomer in a ring-open polymerization method is hydrogenated by an ordinary hydrogenation method. Examples of such monomers include 2-norbornene and its derivatives substituted with an alkyl group and/or an alkylidene group such as 5-methyl-2-norbornene, 5,5-dimethyl-2-norbornene, 5-ethyl-2-norbornene, 5-butyl-2-norbornene and 5-ethylidene-2-norbornene; dicyclopentadiene, 2,3-dihydrodicyclopentadiene and derivatives thereof substituted with an alkyl group such as methyl, ethyl, propyl or butyl group; dimethanooctahydronaphthalene and substitution derivatives thereof each with an alkyl group and/or an alkylidene group such as 6-methyl-1,4:5,8-dimethano-1,4,4a,5,6,7,8,8a-octahydronaphthalene, 6-ethyl-1,4:5,8-dimethano-1,4,4a,5,6,7,8,8a-octahydronaphthalene and 6-ethylidene-1,4:5,8-dimethano-1,4,4a,5,6,7,8,8a-octahydronaphthale ne; a trimer or a tetramer of cyclopentadiene such as 4,9:5,8-dimethano-3a,4,4a,5,8,8a,9,9a-octahydro-1H-benzoindene, 5,8-methano-3a,4,4a,5,8,8a,9,9a-octahydro-1H-benzoindene, 5,8-methano-1,4,4a,4b,5,8,8a,9b-octahydro-1H-fluorene and 4,11:5,10:6,9-trimethano-3a,4,4a,5,5a,6,9,9a,10,10a,11,11a-dodecahy dro-1H-cyclopenta anthracene.

Further, the polymer having a structural unit as represented by Chemical 2 is a polymer obtained by copolymerizing a norbornene type monomer as described above as a monomer and ethylene by using a known method and/or a hydrogenated article thereof and either one is a saturated polymer.

The cyclic polyolefin in the invention may be any one of the thermoplastic saturated norbornene type polymers which is a hydrogenated article of an open-ring polymer of a polar monomer, a copolymer of the norbornene type monomer and ethylene and the hydrogenated article of the copolymer.

In the present invention, a thermoplastic saturated norbornene type polymer of only monomers free from polar groups is preferable from the standpoint of impermeability of moisture. However, a polymer partially copolymerized with a polar monomer within a range which does not impair obtaining of the invention is permissible.

As for polymers which each can be blended with the cyclic polyolefin, other polymers such as low-density polyethylene, straight-chain low-density polyethylene, medium-density polyethylene, high-density polyethylene, polypropylene, an ethylene/propylene copolymer and an ethylene-vinyl acetate are included. A blend ratio of any one of the other polymers is ordinarily cyclic polyofefin : other polymer=50 to 99 : 50 to 1 (in terms of weight ratio).

A layer formed by the cyclic olefin or a polymer blend thereof has a thickness of, ordinarily, 3 to 5000 µm and, preferably, 5 to 2000 µm and, when it is used as the multi-layered medical plural chamber container, the thickness is, ordinarily, 10 to 500 µm and, preferably, 20 to 300 µm.

As for a linear polyolefin layer adhered to the cyclic polyolefin layer, linear polyolefins, for example, low-density polyethylene, straight-chain low-density polyethylene, medium-density polyethylene, high-density polyethylene, polypropylene and an ethylene/propylene copolymer and an ethylene/vinyl-acetate copolymer are included. As for polyamide layers, layers of nylon 6, nylon 66, nylon 12, nylon 612 and mixtures thereof are included.

In the present invention, a layer containing the linear polyolefin or the polyamide is positioned adhered to a layer comprising the cyclic polyolefin or the polymer blend containing the cyclic polyolefin. Specifically, a film of these layers can be produced by using a dry lamination method, an extrusion coating method, a coextrusion lamination method (T-die method, inflation method), a heat lamination method or a lamination method in combination thereof. Particularly, the coextrusion lamination method is preferred. The coextrusion lamination method is performed by applying, for example, the T-die method, a multi-layered air-cooled inflation method or a multi-layered water-cooled inflation method.

The linear polyolefin or polyamide layer has a thickness of, ordinarily, 10 to 500 µm and, preferably, 20 to 300 µm.

In the present invention, there further exists a gas barrier layer and/or a printable layer on the layer containing the linear polyolefin or polyamide.

In the present invention, the gas barrier layer is, specifically, a metal foil, a metal deposited layer or an inorganic-material deposited layer. Examples of such metal foil layers include an aluminum foil. Examples of such metal deposited layers include an alumina deposited polyester film and nylon film. Examples of such inorganic-material deposited layers include a silica deposited polyester film. Thickness of the gas barrier layer is, ordinarily, 5 to 50 µm.

Further, examples of such printable layers include a polyester layer of, for example, polyethylene terephthalate and that deposited thereon with an inorganic material such as silica. Thickness of the printable layer is, ordinarily, 5 to 50 µm.

As for one embodiment of the multi-layered film in the present invention, (i) a layer comprising a cyclic polyolefin or a polymer blend containing the cyclic polyolefin, (ii) a layer, which is adhered to the layer (i), comprising a linear polyolefin or a polyamide, (iii) a polyester layer or the polyester layer comprising an inorganic-material deposited thin film and (iv) a linear polyolefin layer are laminated in this order. It is desirable that the (ii) layer comprising the linear polyolefin or the polyamide, the (iii) polyester layer and the (iv) linear polyolefin layer are laminated with an adhesion layer being interposed between any two adjacent layers.

As for another embodiment of the multi-layered film in the present invention, (i) a layer comprising a cyclic polyolefin or a polymer blend containing the cyclic polyolefin, (ii) a layer, which is adhered to the layer (i), comprising a linear polyolefin or a polyamide, (v) a metal foil, a metal deposited layer or an inorganic-material deposited layer and (vi) a polyester layer are laminated in this order. It is desirable that the (ii) layer comprising the linear polyolefin or the polyamide, the (v) metal foil, metal deposited layer or inorganic-material deposited layer and the (vi) polyester layer are laminated with an adhesion layer being interposed between any two adjacent layers.

As for the production method for the multi-layered film, there may be used a method for laminating these layers by a dry lamination method, an extrusion coating method, a coextrusion lamination (T-die method, inflation method), a heat lamination method or a lamination method of a combination of these methods. Other than these methods, a method in which the thermoplastic saturated norbornene type polymer is dissolved in a good solvent, namely, a heterocyclic hydrocarbon type solvent (cyclopentene, cyclohexane, methyl cyclohexane decalin or the like), an aromatic hydrocarbon type solvent (toluene, xylene, ethyl benzene or the like), a chlorinated hydrocarbon type solvent (chloroform, chlorobenzene or the like), mixed solvents thereof or solvents in which these solvents are mixed with other solvents and the resultant solution is applied and, then, dried can be adopted.

Further, lamination may be performed by using an adhesive or an adhesive resin between layers. As for such adhesives, a polyurethane type adhesive is mentioned. As for such adhesive resins, a vinyl acetate copolymer emulsion type, a solution type of a synthetic rubber (chloroprene, SBR, butyl rubber or the like), a solution type of polyolefin which has been chlorinated or denatured by maleic anhydride and the like can be mentioned.

Thickness of the adhesion layer is appropriately selected depending on types, thickness or the like of the films to be bonded.

As for methods for producing the multi-layered container, various types of methods such as a sheet forming method (heat forming method) such as a vacuum forming method, a pneumatic forming method, a blow forming method such as a multi-layered coextrusion blow forming and a method in which peripheral portions of multi-layered films which have each been cut in a predetermined shape are heat-sealed or bonded with each other with an adhesive with each other to produce a bag-shape article can be adopted.

The multi-layered medical container in the present invention is characterized in that the multi-layered films are bonded with each other such that the innermost layers are each a layer comprising the cyclic polyolefin or the polymer blend containing the cyclic polyolefin.

The low molecular weight component and the adhesion layer component eluted from the multi-layered container can be reduced by allowing the innermost layer to be a layer comprising the cyclic polyolefin or the polymer blend containing the cyclic polyolefin. The cyclic polyolefin has a higher density than the low density polyethylene and has a three-dimensional structure, so that the molecular mobility of the cyclic polyolefin is suppressed more than that of the linear polyolefin. Laminating the cyclic polyolefin film with the linear polyolefin film results in tempering of the hardness that is an actual characteristic of the cyclic polyolefin and providing a smooth surface of the laminated film. Further, the multi-layered container in the present invention can have rigidity of the bag and printability owing to the polyester layer and, still further, is imparted with a barrier property against steam or a gas owing to the metal foil, the metal deposited layer or the inorganic-material deposited layer and, accordingly, is capable of containing a medicament which is unstable against moisture and gas such as oxygen.

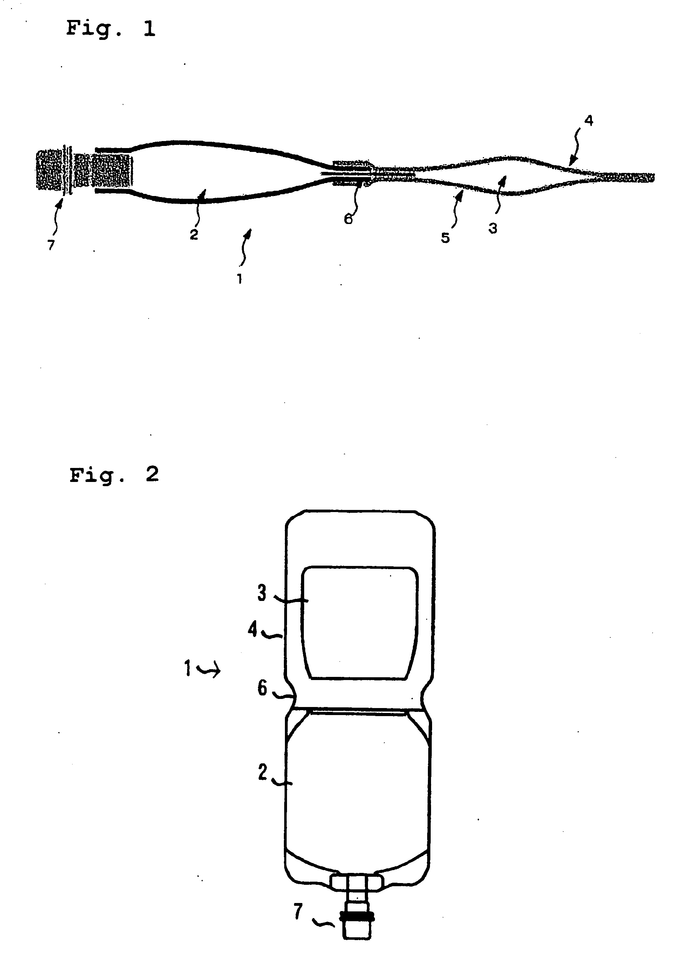

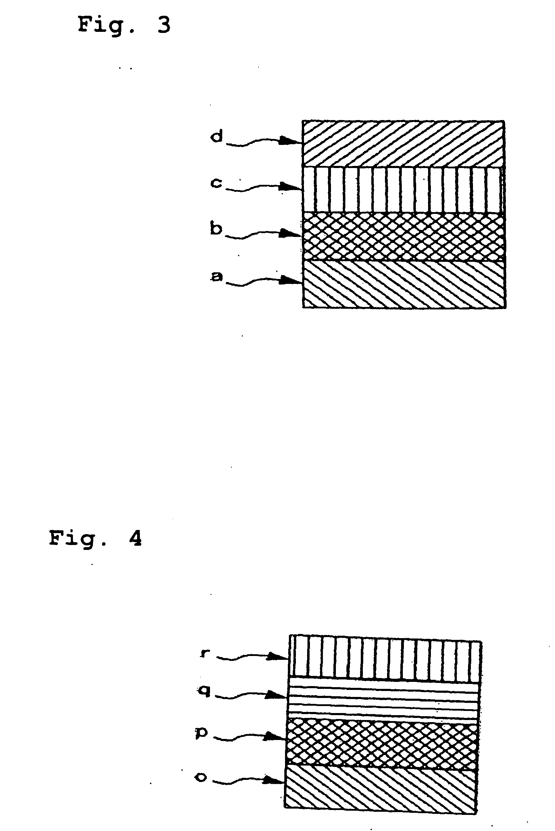

As for one embodiment of the multi-layered medical plural chamber container in the present invention, there is a bag-shape article which is divided by a peelable seal portion into a medical liquid-containing chamber that stores a medical liquid and a medicament-containing chamber that stores a medicament in a fluid-tight manner. The medicament-containing chamber is a bag-shape article constituted by a front sheet and a rear sheet, while the medical liquid-containing chamber is a bag-shape article formed by a tubular film. One embodiment of a plural chamber container of the present invention is shown in FIGS. 1 and 2. In FIGS. 1 and 2, the reference numeral 1 denotes a plural chamber container; the reference numeral 2 denotes a medical liquid-containing chamber; the reference numeral 3 denotes a medicament-containing chamber; the reference numeral 4 denotes a front sheet; the reference numeral 5 denotes a rear sheet; the reference numeral 6 denotes a weak seal portion; and the reference numeral 7 denotes a medicament leading-out portion. One embodiment of the multi-layered film constituting the container in the present invention is shown in FIGS. 3 and 4. In FIG. 3, the reference sign (a) denotes a layer (innermost layer) comprising a cyclic polyolefin or a polymer blend containing the cyclic polyolefin; the reference sign (b) denotes a layer (intermediate layer) comprising a linear polyolefin or a polyamide; the reference sign (c) denotes a polyester layer or a polyester layer (intermediate layer) comprising an inorganic-material deposited thin film; and the reference sign (d) denotes a linear polyolefin layer (outermost layer). In FIG. 4, the reference sign (o) denotes a layer (innermost layer) comprising a cyclic polyolefin or a polymer blend containing the cyclic polyolefin; the reference sign (p) denotes a layer (intermediate layer) comprising a linear polyolefin or a polyamide; the reference sign (q) denotes a metal foil, a metal deposited layer or an inorganic-material deposited layer (intermediate layer); and the reference sign (r) denotes a polyester layer (outermost layer).

The front sheet of the medicament-containing chamber is constituted by a multi-layered film in which (i) a layer (innermost layer) comprising a cyclic polyolefin or a polymer blend containing the cyclic polyolefin, (ii) a layer (intermediate layer), which is adhered to the layer as described in (i), comprising a linear polyolefin or a polyamide, (iii) a polyester layer or a polyester layer (intermediate layer) comprising an inorganic-material deposited thin film and (iv) a linear polyolefin layer (outermost layer) are laminated in this order (FIG. 3). Further, the rear sheet of the medicament-containing chamber is constituted by a multi-layered film in which (i) a layer (innermost layer) comprising a cyclic polyolefin or a polymer blend containing the cyclic polyolefin, (ii) a layer (intermediate layer), which is adhered to the layer as described in (i), comprising a linear polyolefin or a polyamide, (v) a metal foil, a metal deposited layer or an inorganic-material deposited layer (another intermediate layer) and (vi) a polyester layer (outermost layer) are laminated in this order (FIG. 4).

In another embodiment in the present invention, the front sheet of the medicament-containing chamber may be constituted by a multi-layered film in which (i) a layer (innermost layer) comprising a cyclic polyolefin or a polymer blend containing the cyclic polyolefin, (ii) a layer (intermediate layer), which is adhered to the layer as described in (i), comprising a linear polyolefin or a polyamide, (iii) a polyester layer or a polyester layer (another intermediate layer) comprising an inorganic-material deposited thin film and (iv) a linear polyolefin layer (outermost layer) are laminated in this order (FIG. 3) and, further, the rear sheet of the medicament-containing chamber may be constituted by a multi-layered film (not shown) in which a linear polyolefin layer (innermost layer), a metal foil, a metal deposited layer or an inorganic-material deposited layer (intermediate layer) and a polyester layer (outermost layer) are laminated on a base material in the stated order.

In still another embodiment in the present invention, the rear sheet of the medicament-containing chamber may be constituted by a multi-layered film in which (i) a layer (innermost layer) comprising a cyclic polyolefin or a polymer blend containing the cyclic polyolefin, (ii) a layer (intermediate layer), which is adhered to the layer as described in (i), comprising a linear polyolefin or a polyamide, (v) a metal foil, a metal deposited layer or an inorganic-material deposited layer (another intermediate layer) and (vi) a polyester layer (outermost layer) are laminated in this order (FIG. 4) and, further, the front sheet of the medicament-containing chamber may be constituted by a multi-layered film (not shown) in which a linear polyolefin layer (innermost layer), a polyester layer or the polyester layer (intermediate layer) comprising an inorganic-material deposited thin film and a linear polyolefin layer (outermost layer) are laminated in the stated order.

It is desirable that the medical liquid-containing chamber is constituted by a monolayer or a multi-layered film containing a polyolefin type resin and is a bag-shape article having two sheets of films or a tubular film. As for such polyolefin type resins, low-density polyethylene, straight-chain low-density polyethylene, medium-density polyethylene, high-density polyethylene, polypropylene, an ethylene/propylene copolymer and blending thereof are mentioned.

The medical liquid-containing chamber that stores the medical liquid and the medicament-containing chamber that stores the medicament are divided by a peelable seal portion in a fluid-tight manner.

The peelable seal portion is a member having an easy-peel function and a portion in which innermost layers forming the medicament-containing chamber and/or the medical liquid-containing chamber are thermally bonded with each other or a portion in which a separate member formed by a linear polyolefin film and/or a cyclic polyolefin film and a resin having a small fusion force and an innermost layer forming the medicament-containing chamber and/or the medical liquid -containing chamber are thermally bonded with each other. As for such separate members, for example, a blend polymer containing polyethylene and polypropylene, an ethylene/propylene copolymer, or a blend (JP-A No. 2001-226499) of a propylene/α-olefin copolymer (A) and another propylene/α-olefin copolymer (B) which has a different α-olefin content from the copolymer (A) and/or a propylene homopolymer can be mentioned.

As for the medical liquids, water for injection, a normal saline solution, a glucose solution, an amino acid solution, a high-calorie infusion, a fat emulsion preparation, a vitamin preparation, a metallic element preparation and the like can be included. Further, the medicament is a solid or liquid-state medicament and an antibiotic, an antibacterial agent, an anti-tumor agent, a hormone preparation, Chinese herbal medicine and the like can be included. Particularly, it is desirable to contain a solid medicament, for example, that which is in a powder state, which is more unstable in storage than the medical liquid.

### Examples

Next, the present invention will be described in further detail with reference to Examples and Comparative Examples.

In the Examples and Comparative Examples, turbidity is measured in accordance with a method as described below.

Turbidity: an amount of transmitted light (parallel light ray from an LED light source) attenuated by a turbidity material and a scattered light amount (measured by a light-receiving portion placed in a direction of 90° from a light source) caused by the turbidity material were simultaneously measured by using a turbidimeter (2100N, available from HACH), to thereby obtain a ratio therebetween. As a turbidity measurement unit, a formadine turbidity (NTU) is adopted.

### Example 1

Cyclic polyolefin (trade name: Zeonor; available from Zeon Corporation, COP) was extruded together with medium density polyethylene (density: 0.938, MDPE) at 250°C by using a coextruder, to thereby form a 2-layer film (former: 30 µm; latter: 20 µm). On a medium density polyethylene layer of the thus-formed 2-layer film, a polyethylene terephthalate film (thickness: 12 µm; available from Mitsubishi Chemical, PET) and the medium density polyethylene film (density: 0.938; thickness: 40 µm, MDPE) were laminated in this order via a polyolefin type adhesive resin (LLDPE), to thereby prepare a multi-layered film (front sheet A). Thickness of the adhesive resin (LLDPE) was 20 µm.

Next, the cyclic polyolefin (trade name: Zeonor; available from Zeon Corporation, COP) was extruded together with medium density polyethylene (density: 0.938, MDPE) at 250°C by using a coextruder, to thereby form a 2-layer film (former: 30 µm; latter: 20 µm). Separately, an aluminum foil (thickness: 20 µm; available from Sun Alumi, Al) and a polyethylene terephthalate film (thickness: 16 µm; available from Toyobo Co., Ltd. PET) were laminated by using a polyurethane type adhesive (Takeda Pharmaceutical Co., Ltd.), to thereby obtain a 2-layer laminate. On the medium density polyethylene layer of the 2-layer film, the aluminum foil of the 2-layer laminate was laminated via a polyolefin type adhesive resin (LLDPE), to thereby produce a multi-layered film (rear sheet B). Thickness of the adhesion layer (LLDPE) was 20µm.

Three-way peripheral portions of the multi-layered film (A) and the multi-layered film (B) were strongly sealed with each other by using a heat sealer at 170°C under 0.3 MPa while allowing the cyclic polyolefin layers to be the innermost layers, to thereby prepare a bag-shape container (140 mm x 115 mm).

Powder-state antibiotic (a) (1.0 g) was filled in the bag-shape container, and the container was sealed by heat to thereby prepare a sample. After the sample was stored for one month at 50°C, 20 g of the powder-state solid antibiotic was taken out of the bag-shape container, dissolved in water (50 ml) and turbidity (NTU) of the resultant solution was measured by using a turbidimeter (2100N; available from HACH). The results are shown in Table 1.

### Comparative Example 1

A container was produced in a same manner as in Example 1 except that the cyclic polyolefin layers of the innermost layers of the multi-layered film (A) and the multi-layered film (B) were changed into straight-chain low density polyethylene (LLDPE) layers. Namely, the cyclic polyolefin (trade name: Zeonor; available from Zeon Corporation, COP) was coextruded together with straight-chain low density polyethylene (density: 0.930) at 250°C by using a coextruder, to thereby form a 2-layer film (former: 30 µm; latter: 20 µm). On the cyclic polyolefin layer of the 2-layer film, a polyethylene terephthalate film (thickness: 12 µm; available from Mitsubishi Chemical, PET) and a straight-chain low density polyethylene (density: 0.930; thickness: 20 µm) were laminated in this order via a polyolefin type adhesive resin (LLDPE), to thereby produce a multi-layered film (front sheet C). Thickness of the adhesive resin was 20µm.

Next, the cyclic polyolefin (trade name: Zeonor; available from Zeon Corporation) was coextruded together with straight-chain low density polyethylene (density: 0.930) at 250°C by using a coextruder, to thereby form a 2-layer film (former: 30 µm; latter: 20 µm). An aluminum foil (thickness: 20 µm; available from Sun Alumi, Al) and a polyethylene terephthalate film (thickness: 16 µm; available from Toyobo Co., Ltd. PET) were laminated by using a polyurethane type adhesive (Takeda Pharmaceutical Co., Ltd.), to thereby obtain a 2-layer laminate. On the cyclic polyolefin layer of the 2-layer film, the aluminum foil of the 2-layer laminate was laminated via a polyolefin type adhesive resin (Japan Polyethylene Corporation), to thereby produce a multi-layered film (rear sheet D). Thickness of the adhesion layer was 20 µm.

Three-way peripheral portions of the multi-layered film (C) and the multi-layered film (D) were strongly sealed with each other by using a heat sealer at 165°C under 0.3 MPa while allowing the medium density polyethylene layers to be the innermost layers, to thereby prepare a bag-shape container (140 mm x 115 mm).

In the same manner as in Example 1, after the sample was stored in the bag-shape container for one month at 50°C, turbidity (NTU) was measured. The results are shown in Table 1.

### Comparative Example 2

A high density polyethylene film (density: 0.957; thickness: 60 µm, HDPE), a silica deposited polyethylene terephthalate film layer (thickness: 12 µm; available from Mitsubishi Chemical, SiPET), a polyethylene terephthalate film layer (thickness: 12 µm; available from Mitsubishi Chemical, PET) and a high density polyethylene film (density: 0.957; thickness: 40 µm, HDPE) were laminated in this order via a polyurethane type adhesive, to thereby produce a multi-layered film (front sheet E). On the other hand, a multi-layered film (rear sheet F) was obtained from a high density polyethylene film (density: 0.957; thickness: 40 µm, HDPE), an aluminum foil (thickness: 20 µm; available from Sun Alumi, Al) and a polyethylene terephthalate film (thickness: 16 µm; Toyobo Co. , Ltd. PET) by using polyurethane type adhesive A520/A50 (Takeda Pharmaceutical Co., Ltd.). Three-way peripheral portions of the multi-layered film (front sheet G) and the multi-layered film (rear sheet H) were strongly sealed with each other by using a heat sealer at 170°C under 0.3 MPa while allowing high density polyethylene layers to be innermost layers, to thereby prepare a bag-shape container (140 mm x 115 mm).

In the same manner as in Example 1, after the sample was stored in the bag-shape container for one month at 50°C, turbidity (NTU) was measured. The results are shown in Table 1.

### Comparative Example 3

Multi-layered films (front sheet G, rear sheet H) were produced by excluding the cyclic polyolefin (trade name: Zeonor; available from Zeon Corporation, COP) from those in Comparative Example 1 and, then, a bag-shape container was prepared in the same manner as in Comparative Example 1.

In the same manner as in Example 1, after the sample was stored in the bag-shape container for one month at 50°C, turbidity (NTU) was measured. The results are shown in Table 1.

### Comparative Example 4

Multi-layered films (front sheet I, rear sheet J) were produced by using a straight-chain low density polyethylene film (density: 0.930; thickness: 60 µm, LLDPE) in place of the high density polyethylene film in Comparative Example 2 and, then, a bag-shape container was prepared in the same manner as in Comparative Example 2.

In the same manner as in Example 1, after the sample was stored in the bag-shape container for one month at 50°C, turbidity (NTU) was measured. The results are shown in Table 1.

**[Table 1]**

| | Front sheet | Rear sheet | Turbidity (NTU) |
|---|---|---|---|
| Example 1 | (A) COP/MDPE/PET/MDPE | (B) COP/MDPE/Al/PET | 1.33 |
| Comparative Example 1 | (C)LLDPE/COP/PET/LLDPE | (D) LLDPE/COP/Al/PET | 2.15 |
| Comparative Example 2 | (E)HDPE/SiPET/PET/HDPE | (F) HDPE/Al/PET | 2.43 |
| Comparative Example 3 | (G) LLDPE/PET/LLDPE | (H) LLDPE/Al/PET | 4.52 |
| Comparative Example 4 | (I)LLDPE/SiPET/PET/LLDPE | (J)LLDPE/Al/PET | 8.91 |

### Example 2

A tube-shape article (100 mm x 150 mm) of a straight-chain low density polyethylene (0.923; thickness: 250 µm) was produced. At a distal end thereof, a medicament discharge port was provided. The resultant tube-shape article was strongly bonded for 3.0 seconds at 145°C and, then, a small chip made of a blend polymer containing polyethylene and polypropylene was inserted to the distal end thereof. The resultant tube-shape article was weakly bonded for 3.5 seconds at 150°C, to thereby form a medical liquid-containing chamber. After this medical liquid-containing chamber was formed, the chamber was filled with a solution and, then, subjected to a steam sterilization. Further, the medicament-containing chamber prepared in Example 1 was subjected to γ-ray sterilization as it is in a bag-shape article (140 mm x 115 mm) and, then, was aseptically filled with a solid medicine preparation. Thereafter, the innermost layer of the remaining one-way end of the bag-shape article which had been strongly bonded at 3-way ends and the outermost layer of the medical liquid -containing chamber were strongly bonded with each other for 4.0 seconds at 150°C via the small chip, to thereby produce the multi-layered medical plural chamber container having the medicament-containing chamber and the medical liquid-containing chamber (FIG. 1).

### Example 3 and Comparative Examples 5-8

Powder-state antibiotic (b)-(f) were filled in separate bag-shape containers as prepared in Example 1 and Comparative Examples 1-4, in the same manner as Example 1 and were stored in the bag-shape containers for one month at 50°C. Turbidity (NTU) of the samples was evaluated in the same manner as Example 1. The results are shown in Table 2.

**Table 2**

| | antibiotic(b) | | antibiotic(c) | | antibiotic(d) | | antibiotic(e) | | antibiotic(f) | |
|---|---|---|---|---|---|---|---|---|---|---|
| time | 0T | 1M | 0T | 1M | 0T | 1M | 0T | 1M | 0T | 1M |
| Ex.3 | 0.93 | 0.92 | 0.80 | 0.65 | 1.60 | 1.25 | 2.85 | 2.32 | 3.81 | 3.83 |
| Com.5 | 0.82 | 1.07 | 0.72 | 1.34 | 1.68 | 2.12 | 2.09 | 5.20 | 3.75 | 4.83 |
| Com.6 | 0.91 | 1.11 | 1.21 | 1.35 | 1.88 | 4.75 | 3.00 | 5.50 | 3.80 | 4.95 |
| Com.7 | 0.98 | 1.22 | 1.15 | 1.83 | 2.56 | 5.81 | 3.65 | 7.15 | 4.21 | 5.66 |
| Com.8 | 1.02 | 1.51 | 1.86 | 2.57 | 5.07 | 8.47 | 4.45 | 9.17 | 4.96 | 6.37 |

| | | | | | | | | | | |
|---|---|---|---|---|---|---|---|---|---|---|
| 0T: immediately after storing the medicament in the container | | | | | | | | | | |
| 1M: one month after storing the medicament in the container | | | | | | | | | | |

## Claims

1. A multi-layered medical container comprising a body for a medicament and a port in the body, wherein the body is formed by a multi-layered film having (i) a first layer comprising a cyclic polyolefin or a polymer blend containing the cyclic polyolefin and (ii) a second layer, adhered to the first layer, comprising a linear polyolefin or a polyamide, and further comprises (iii) a gas barrier layer and/or (iv) a printable layer on the second layer in this order.

2. The multi-layered medical container according to claim 1, wherein the gas barrier layer is a metal foil, a metal deposited layer or an inorganic-material deposited layer.

3. The medical container according to claim 1, wherein the printable layer is a polyester layer.

4. The multi-layered medical container according to claim 1, wherein the multi-layered film is formed by laminating in this order (i) a layer comprising a cyclic polyolefin or a polymer blend containing the cyclic polyolefin, (ii) a layer, which is adhered to layer (i), comprising a linear polyolefin or a polyamide, (iii) a polyester layer or a polyester layer having an inorganic-material deposited thin film and (iv) a linear polyolefin layer.

5. The multi-layered medical container according to claim 4, wherein the layer (ii) comprising the linear polyolefin or the polyamide, the (iii) polyester layer or the polyester layer having the inorganic-material deposited thin film and the linear polyolefin layer (iv) are laminated with an adhesion layer being interposed between any two adjacent layers.

6. The multi-layered medical container according to claim 1, wherein the multi-layered film is formed by laminating in this order (i) a layer comprising a cyclic polyolefin or a polymer blend containing the cyclic polyolefin, (ii) a layer, which is adhered to the layer (i), comprising a linear polyolefin or a polyamide, (v) a metal foil, a metal deposited layer or an inorganic-material deposited layer and (vi) a polyester layer.

7. The multi-layered medical container according to claim 6, wherein the layer (ii) comprising the linear polyolefin or the polyamide, the metal foil, the metal deposited layer or the inorganic-material deposited layer (v) and the polyester layer (vi) are laminated with an adhesion layer being interposed between any two adjacent layers.

8. A multi-layered medical container comprising a body for storing a medicament and a discharge port provided in the body and prepared by bonding two multi-layered films according to claim 4 with each other such that an innermost layer comprises the cyclic polyolefin or a polymer blend comprising the cyclic polyolefin.

9. The multi-layered medical container comprising a body for storing a medicament and a discharge port provided in the body, wherein the body is prepared by bonding two multi-layered films according to claim 6 with each other such that an innermost layer comprises the cyclic polyolefin or a polymer blend comprising the cyclic polyolefin.

10. The multi-layered medical container comprising a body for storing a medicament and a discharge port provided in the body, wherein the body is prepared by bonding to each other the multi-layered film according to claim 5 and a multi-layered film formed by laminating in this order (i) a layer comprising a cyclic polyolefin or a polymer blend containing the cyclic polyolefin, (ii) a layer, which is adhered to the layer (i), comprising a linear polyolefin or a polyamide, (v) a metal foil, a metal deposited layer or an inorganic-material deposited layer and (vi) a polyester layer such that an innermost layer comprises the cyclic polyolefin or a polymer blend comprising the cyclic polyolefin.

11. The multi-layered medical container according to claim 1, wherein the medicament is a solid medicament.

12. The multi-layered medical container according to claim 1, wherein the medicament is a solid medicament selected from the group consisting of an antibiotic, an antibacterial agent, an antitumor agent and a hormone preparation.

13. A multi-layered medical plural chamber container comprising a body and a discharge port provided in the body, the body being divided into a medical liquid-containing chamber for storing a medical liquid and a medicament-containing chamber for storing a medicament by a peelable seal portion in a fluid-tight manner,
wherein the medicament-containing chamber is a bag-shape article constituted by a front sheet and a rear sheet
and wherein the front sheet of the medicament-containing chamber is constituted by a multi-layered film having (i) a first layer comprising a cyclic polyolefin or a polymer blend containing the cyclic polyolefin and (ii) a second layer, adhered to the first layer, comprising a linear polyolefin or a polyamide, and (iii) a gas barrier layer and/or (iv) a printable layer on the second layer in this order.

14. The multi-layered medical plural chamber container according to claim 13, wherein the front sheet of the medicament-containing chamber is constituted by a multi-layered film in which (i) an innermost layer comprising a cyclic polyolefin or a polymer blend containing the cyclic polyolefin, (ii) an intermediate layer, which is adhered to the layer (i), comprising a linear polyolefin or a polyamide, (iii) a second intermediate layer which is polyester layer or a polyester layer comprising an inorganic-material deposited thin film and (iv) an outermost layer of a linear polyolefin layer are laminated in this order.

15. The multi-layered medical plural chamber container according to claim 13, wherein the rear sheet of the medicament-containing chamber is constituted by a multi-layered film in which (i) an innermost layer comprising a cyclic polyolefin or a polymer blend containing the cyclic polyolefin, (ii) an intermediate layer, which is adhered to the layer (i), comprising a linear polyolefin or a polyamide as a second intermediate layer, (v) a metal foil, a metal deposited layer or an inorganic-material deposited layer and (vi) an outermost layer of a polyester are laminated in this order.

16. The multi-layered medical plural chamber container according to claim 13, wherein the front sheet of the medicament-containing chamber is constituted by a multi-layered film in which (i) an innermost layer comprising a cyclic polyolefin or a polymer blend containing the cyclic polyolefin, (ii) an intermediate layer, which is adhered to the layer (i), comprising a linear polyolefin or a polyamide, (iii) a second intermediate layer which is polyester layer or a polyester layer comprising an inorganic-material deposited thin film and (iv) an outermost layer of a linear polyolefin layer are laminated in this order and the rear sheet of the medicament-containing chamber is constituted by a multi-layered film in which (i) an innermost layer comprising a cyclic polyolefin or a polymer blend containing the cyclic polyolefin, (ii) an intermediate layer, which is adhered to the layer (i), comprising a linear polyolefin or a polyamide, (v) a metal foil, a metal deposited layer or an inorganic-material deposited layer and (vi) an outermost layer of polyester layer are laminated in this order.

17. The multi-layered medical plural chamber container according to claim 13, wherein the medical liquid-containing chamber is a tubular article constituted by a monolayer film or a multi-layered film comprising a linear polyolefin.

18. The multi-layered medical plural chamber container according to claim 13, wherein the peelable seal portion is a portion in which innermost layers forming the medicament-containing chamber and/or the medical liquid -containing chamber are bonded with each other or is a portion in which a separate member formed by a resin film which adheres weakly to a linear polyolefin film and/or a cyclic polyolefin film and an innermost layer forming the medicament-containing chamber and/or the medical liquid -containing chamber are bonded with each other.

19. The multi-layered medical container according to claim 13, wherein the medicament is a solid medicament.

20. The multi-layered medical container according to claim 13, wherein the medicament is a solid medicament selected from the group consisting of an antibiotic, an antibacterial agent, an anti-tumor agent and a hormone preparation.

21. The multi-layered medical container according to claim 13, wherein the medical liquid is water for injection, a normal saline solution, a glucose liquid, an amino acid liquid, a high-calorie infusion, a fat emulsion preparation, a vitamin preparation or a metallic element preparation.

## Patentansprüche

1. Mehrschichtiger medizinischer Behälter, umfassend einen Körper für ein Medikament und eine Öffnung in dem Körper, wobei der Körper durch eine mehrschichtige Folie ausgebildet ist, die (i) eine erste Schicht, die ein cyclisches Polyolefin oder einen Polymerblend, der das cyclische Polyolefin enthält, umfasst und (ii) eine zweite Schicht, die an der ersten Schicht anhaftet und ein lineares Polyolefin oder ein Polyamid umfasst, aufweist und die des Weiteren (iii) eine Gasbarriereschicht und/oder (iv) eine bedruckbare Schicht auf der zweiten Schicht in dieser Reihenfolge umfasst.

2. Mehrschichtiger medizinischer Behälter gemäß Anspruch 1, wobei die Gasbarriereschicht eine Metallfolie, eine Metall-beschichtete Schicht oder eine mit anorganischem Material beschichtete Schicht ist.

3. Mehrschichtiger medizinischer Behälter gemäß Anspruch 1, wobei die bedruckbare Schicht eine Polyesterschicht ist.

4. Mehrschichtiger medizinischer Behälter gemäß Anspruch 1, wobei die mehrschichtige Folie durch Laminieren (i) einer Schicht, die ein cyclisches Polyolefin oder einen Polymerblend, der das cyclische Polyolefin enthält, umfasst, (ii) einer Schicht, die an der Schicht (i) anhaftet und ein lineares Polyolefin oder ein Polyamid umfasst, (iii) einer Polyesterschicht oder einer Polyesterschicht, die einem mit anorganischem Material beschichtete dünne Folie aufweist, und (iv) einer linearen Polyolefinschicht in dieser Reihenfolge ausgebildet ist.

5. Mehrschichtiger medizinischer Behälter gemäß Anspruch 4, wobei die Schicht (ii), die das lineare Polyolefin oder das Polyamid umfasst, die Polyesterschicht oder die Polyesterschicht, die die mit anorganischem Material beschichtete dünne Folie aufweist, und die lineare Polyolefinschicht (iv) mit einer Haftschicht laminiert sind, die zwischen je zwei benachbarten Schichten eingeschoben ist.

6. Mehrschichtiger medizinischer Behälter gemäß Anspruch 1, wobei die mehrschichtige Folie durch Laminieren von (i) einer Schicht, die ein cyclisches Polyolefin oder einen Polymerblend, der das cyclische Polyolefin enthält, umfasst, (ii) einer Schicht, die an der Schicht (i) haftet und ein lineares Polyolefin oder ein Polyamid umfasst, (v) einer Metallfolie, einer Metall-beschichteten Schicht oder einer mit anorganischen Material beschichteten Schicht sowie (vi) einer Polyesterschicht in dieser Reihenfolge ausgebildet ist.

7. Mehrschichtiger medizinischer Behälter gemäß Anspruch 6, wobei die Schicht (ii), die das lineare Polyolefin oder das Polyamid umfasst, die Metallfolie, die Metall-beschichtete Schicht oder die mit anorganischem Material beschichtete Schicht (v) sowie die Polyesterschicht (vi) mit einer Haftschicht laminiert sind, die zwischen je zwei benachbarten Schichten eingefügt ist.

8. Mehrschichtiger medizinischer Behälter, umfassend einen Körper zur Lagerung eines Medikaments und eine in dem Körper vorgesehene Entnahmeöffnung, wobei der mehrschichtige medizinische Behälter durch Verbinden zweier mehrschichtiger Folien gemäß Anspruch 4 miteinander derart, dass eine innerste Schicht das cyclische Polyolefin oder einen Polymerblend, der das cyclische Polyolefin umfasst, umfasst, hergestellt worden ist.

9. Mehrschichtiger medizinischer Behälter, umfassend einen Körper zur Lagerung eines Medikaments und eine in dem Körper vorgesehene Entnahmeöffnung, wobei der Körper durch Verbinden zweier mehrschichtiger Folien gemäß Anspruch 6 miteinander derart, dass eine innerste Schicht das cyclische Polyolefin oder einen Polymerblend, der das cyclische Polyolefin umfasst, umfasst, hergestellt worden ist.

10. Mehrschichtiger medizinischer Behälter, umfassend einen Körper zur Lagerung eines Medikaments und eine in dem Körper vorgesehene Entnahmeöffnung, wobei der Körper durch Verbinden der mehrschichtigen Folie gemäß Anspruch 5 und einer mehrschichtigen Folie, die durch Laminieren (i) einer Schicht, die ein cyclisches Polyolefin oder einen Polymerblend, der das cyclische Polyolefin enthält, umfasst, (ii) einer Schicht, die an der Schicht (i) anhaftet und ein lineares Polyolefin oder ein Polyamid umfasst, (v) einer Metallfolie, einer Metall-beschichteten Schicht oder einer mit anorganischem Material beschichteten Schicht sowie (vi) einer Polyesterschicht in dieser Reihenfolge gebildet worden ist, miteinander derart, dass eine innerste Schicht das cyclische Polyolefin oder einen Polymerblend, der das cyclische Polyolefin umfasst, umfasst, hergestellt ist.

11. Mehrschichtiger medizinischer Behälter gemäß Anspruch 1, wobei das Medikament ein festes Medikament ist.

12. Mehrschichtiger medizinischer Behälter gemäß Anspruch 1, wobei das Medikament ein festes Medikament ist, das aus der Gruppe, bestehend aus einem Antibiotikum, einem antibakteriellen Mittel, einem Antitumormittel und einem Hormonpräparat ausgewählt ist.

13. Mehrschichtiger medizinischer Mehrkammerbehälter, umfassend einen Körper und eine in dem Körper vorgesehene Entnahmeöffnung, wobei der Körper in eine medizinische Flüssigkeit enthaltende Kammer zur Lagerung einer medizinischen Flüssigkeit und eine ein Medikament enthaltende Kammer zur Lagerung eines Medikaments durch einen abziehbaren Verschlussteil in einer flüssigkeitsdichten Weise unterteilt ist,
wobei die Medikament enthaltende Kammer ein beutelförmiger Gegenstand ist, der durch eine Vorderfolie und eine Rückfolie gebildet worden ist,
und wobei die Vorderfolie der ein Medikament enthaltenden Kammer durch eine mehrschichtige Folie ausgebildet ist, die (i) eine erste Schicht, die ein cyclisches Polyolefin oder einen Polymerblend, der das cyclische Polyolefin enthält, umfasst, und (ii) eine zweite Schicht, die an der ersten Schicht anhaftet und ein lineares Polyolefin oder ein Polyamid umfasst, sowie (iii) eine Gasbarriereschicht und/oder (iv) eine bedruckbare Schicht auf der zweiten Schicht in dieser Reihenfolge aufweist.

14. Mehrschichtiger medizinischer Mehrkammerbehälter gemäß Anspruch 13, wobei die Vorderfolie der ein Medikament enthaltenden Kammer durch eine mehrschichtige Folie ausgebildet ist, in der (i) eine innerste Schicht, die ein cyclisches Polyolefin oder einen Polymerblend, der das cyclische Polyolefin enthält, umfasst, (ii) eine Zwischenschicht, die an der Schicht (i) anhaftet und ein lineares Polyolefin oder ein Polyamid umfasst, (iii) eine zweite Zwischenschicht, die eine Polyesterschicht oder eine Polyesterschicht, die einen mit anorganischen Material beschichteten dünnen Film umfasst, ist, sowie (iv) eine äußerste Schicht einer linearen Polyolefinschicht in dieser Reihenfolge laminiert sind.

15. Mehrschichtiger medizinischer Mehrkammerbehälter gemäß Anspruch 13, wobei die Rückfolie der ein Medikament enthaltenden Kammer durch eine mehrschichtige Folie ausgebildet ist, in der (i) eine innerste Schicht, die ein cyclisches Polyolefin oder einen Polymerblend, der das cyclische Polyolefin enthält, umfasst, (ii) eine Zwischenschicht, die an der Schicht (i) anhaftet und ein lineares Polyolefin oder ein Polyamid umfasst, als eine zweite Zwischenschicht (v) eine Metallfolie, eine Metall-beschichtete Schicht oder eine mit anorganischem Material beschichtete Schicht sowie (vi) eine äußerste Schicht eines Polyesters in dieser Reihenfolge laminiert sind.

16. Mehrschichtiger medizinischer Mehrkammerbehälter gemäß Anspruch 13, wobei die Vorderfolie der ein Medikament enthaltenden Kammer durch eine mehrschichtige Folie ausgebildet ist, in der (i) eine innerste Schicht, die ein cyclisches Polyolefin oder einen Polymerblend, der das cyclische Polyolefin enthält, umfasst, (ii) eine Zwischenschicht, die an der Schicht (i) anhaftet und ein lineares Polyolefin oder ein Polyamid umfasst, (iii) eine zweite Zwischenschicht, die eine Polyesterschicht oder eine Polyesterschicht, die einen mit anorganischen Material beschichteten dünnen Film umfasst, ist, sowie (iv) eine äußerste Schicht einer linearen Polyolefinschicht in dieser Reihenfolge laminiert sind, und die Rückfolie der ein Medikament enthaltenden Kammer durch eine mehrschichtige Folie ausgebildet ist, in der (i) eine innerste Schicht, die ein cyclisches Polyolefin oder einen Polymerblend, der das cyclische Polyolefin enthält, umfasst, (ii) eine Zwischenschicht, die an der Schicht (i) anhaftet und ein lineares Polyolefin oder ein Polyamid umfasst, (v) eine Metallfolie, eine Metall-beschichtete Schicht oder eine mit anorganischem Material beschichtete Schicht sowie (vi) eine äußerste Schicht einer Polyesterschicht in dieser Reihenfolge laminiert sind.

17. Mehrschichtiger medizinischer Mehrkammerbehälter gemäß Anspruch 13, wobei die medizinische Flüssigkeit enthaltende Kammer ein schlauchartiger Gegenstand ist, der durch eine einschichtige Folie oder eine mehrschichtige Folie, die ein lineares Polyolefin umfasst, ausgebildet ist.

18. Mehrschichtiger medizinischer Mehrkammerbehälter gemäß Anspruch 13, wobei der abziehbare Verschlussteil ein Teil ist, in dem innerste Schichten, die die ein Medikament enthaltende Kammer und/oder die medizinische Flüssigkeit enthaltende Kammer bilden, miteinander verbunden sind, oder ein Teil ist, in dem ein separates Element, das durch einen Harzfilm ausgebildet ist, der schwach an einer linearen Polyolefinfolie und/oder einer cyclischen Polyolefinfolie anhaftet, und eine innerste Schicht, die die ein Medikament enthaltende Kammer und/oder die medizinische Flüssigkeit enthaltende Kammer bildet, miteinander verbunden sind.

19. Mehrschichtiger medizinischer Mehrkammerbehälter gemäß Anspruch 13, wobei das Medikament ein festes Medikament ist.

20. Mehrschichtiger medizinischer Mehrkammerbehälter gemäß Anspruch 13, wobei das Medikament ein festes Medikament ist, das aus der Gruppe, bestehend aus einem Antibiotikum, einem antibakteriellen Mittel, einem Antitumormittel und einem Hormonpräparat, ausgewählt ist.

21. Mehrschichtiger medizinischer Mehrkammerbehälter gemäß Anspruch 13, wobei die medizinische Flüssigkeit Wasser zur Injektion, eine normale Salzlösung, eine Glucoseflüssigkeit, eine Aminosäureflüssigkeit, eine Infusion mit hohem Kaloriengehalt, eine Fettemulsionspräparat, ein Vitaminpräparat oder ein Präparat mit metallischem Element ist.

## Revendications

1. Récipient médical multicouche comprenant un corps pour un médicament et un orifice dans le corps, dans lequel le corps est formé d'un film multicouche disposant (i) d'une première couche comprenant une polyoléfine cyclique ou un mélange de polymère contenant la polyoléfine cyclique et (ii) d'une seconde couche, collée sur la première couche, comprenant une polyoléfine linéaire ou un polyamide, et comprenant en outre (iii) une couche barrière contre les gaz et/ou (iv) une couche imprimable sur la seconde couche dans cet ordre.

2. Récipient médical multicouche selon la revendication 1, dans lequel la couche barrière contre les gaz est une feuille de métal, une couche ayant un dépôt de métal ou une couche ayant un dépôt de matériau inorganique.

3. Récipient médical selon la revendication 1, dans lequel la couche imprimable est une couche de polyester.

4. Récipient médical multicouche selon la revendication 1, dans lequel le film multicouche est formé en stratifiant dans cet ordre (i) une couche comprenant une polyoléfine cyclique ou un mélange de polymère contenant la polyoléfine cyclique, (ii) une couche, qui est collée sur la couche (i), comprenant une polyoléfine linéaire ou un polyamide, (iii) une couche de polyester ou une couche de polyester disposant d'un film mince ayant un dépôt de matériau inorganique et (iv) une couche de polyoléfine linéaire.

5. Récipient médical multicouche selon la revendication 4, dans lequel la couche (ii) comprenant la polyoléfine linéaire ou le polyamide, la couche (iii) de polyester ou la couche de polyester disposant du film mince ayant un dépôt de matériau inorganique et la couche de polyoléfine linéaire (iv) sont stratifiées avec une couche d'adhérence intercalée entre l'une quelconque des deux couches adjacentes.

6. Récipient médical multicouche selon la revendication 1, dans lequel le film multicouche est formé en stratifiant dans cet ordre (i) une couche comprenant une polyoléfine cyclique ou un mélange de polymère contenant la polyoléfine cyclique, (ii) une couche, qui est collée sur la couche (i), comprenant une polyoléfine linéaire ou un polyamide, (v) une feuille de métal, une couche ayant un dépôt de métal ou une couche ayant un dépôt de matériau inorganique et (vi) une couche de polyester.

7. Récipient médical multicouche selon la revendication 6, dans lequel la couche (ii) comprenant la polyoléfine linéaire ou le polyamide, la feuille de métal, la couche ayant un dépôt de métal ou la couche ayant un dépôt de matériau inorganique (v) et la couche de polyester (vi) sont stratifiées avec une couche d'adhérence intercalée entre l'une quelconque des deux couches adjacentes.

8. Récipient médical multicouche comprenant un corps destiné à stocker un médicament et un orifice d'évacuation prévu dans le corps et préparé en liant deux films multicouches selon la revendication 4 l'un avec l'autre de sorte qu'une couche la plus interne comprenne la polyoléfine cyclique ou un mélange de polymère comprenant la polyoléfine cyclique.

9. Récipient médical multicouche comprenant un corps destiné à stocker un médicament et un orifice d'évacuation prévu dans le corps, dans lequel le corps est préparé en liant deux films multicouches selon la revendication 6 de sorte qu'une couche la plus interne comprenne la polyoléfine cyclique ou un mélange de polymère comprenant la polyoléfine cyclique.

10. Récipient médical multicouche comprenant un corps destiné à stocker un médicament et un orifice d'évacuation prévu dans le corps, dans lequel le corps est préparé en liant l'un à l'autre le film multicouche selon la revendication 5 et un film multicouche formé en stratifiant dans cet ordre (i) une couche comprenant une polyoléfine cyclique ou un mélange de polymère contenant la polyoléfine cyclique, (ii) une couche, qui est collée sur la couche (i), comprenant une polyoléfine linéaire ou un polyamide, (v) une feuille de métal, une couche ayant un dépôt de métal ou une couche ayant un dépôt de matériau inorganique et (vi) une couche de polyester de sorte que la couche la plus interne comprenne la polyoléfine cyclique ou un mélange de polymère comprenant la polyoléfine cyclique.

11. Récipient médical multicouche selon la revendication 1, dans lequel le médicament est un médicament solide.

12. Récipient médical multicouche selon la revendication 1, dans lequel le médicament est un médicament solide choisi dans le groupe comprenant un antibiotique, un agent antibactérien, un agent anti-tumoral et une préparation hormonale.

13. Récipient médical multicouche à plusieurs compartiments comprenant un corps et un orifice d'évacuation prévu dans le corps, le corps étant divisé en un compartiment contenant un liquide médical destiné à stocker un liquide médical et un compartiment contenant un médicament destiné à stocker un médicament par une partie d'opercule pelable de manière hermétique au fluide,
dans lequel le compartiment contenant un médicament est un article en forme de sac constitué d'une feuille avant et d'une feuille arrière
et dans lequel la feuille avant du compartiment contenant un médicament est constituée d'un film multicouche ayant (i) une première couche comprenant une polyoléfine cyclique ou un mélange de polymère contenant la polyoléfine cyclique et (ii) une seconde couche, collée sur la première couche, comprenant une polyoléfine linéaire ou un polyamide, et (iii) une couche barrière contre les gaz et/ou (iv) une couche imprimable sur la seconde couche dans cet ordre.

14. Récipient médical multicouche à plusieurs compartiments selon la revendication 13, dans lequel la feuille avant du compartiment contenant un médicament est constituée d'un film multicouche dans lequel (i) la couche la plus interne comprenant une polyoléfine cyclique ou un mélange de polymère contenant la polyoléfine cyclique, (ii) une couche intermédiaire, qui est collée sur la couche (i), comprenant une polyoléfine linéaire ou un polyamide, (iii) une seconde couche intermédiaire qui est une couche de polyester ou une couche de polyester comprenant un film mince ayant un dépôt de matériau organique et (iv) la couche la plus externe d'une couche de polyoléfine linéaire sont stratifiées dans cet ordre.

15. Récipient médical multicouche à plusieurs compartiments selon la revendication 13, dans lequel la feuille arrière du compartiment contenant un médicament est constituée d'un film multicouche dans lequel (i) la couche la plus interne comprenant une polyoléfine cyclique ou un mélange de polymère contenant la polyoléfine cyclique, (ii) une couche intermédiaire, qui est collée sur la couche (i), comprenant une polyoléfine linéaire ou un polyamide comme seconde couche intermédiaire, (v) une feuille de métal, une couche ayant un dépôt de métal ou une couche ayant un dépôt de matériau inorganique et (vi) la couche la plus externe d'un polyester sont stratifiées dans cet ordre.

16. Récipient médical multicouche à plusieurs compartiments selon la revendication 13, dans lequel la feuille avant du compartiment contenant un médicament est constituée d'un film multicouche dans lequel (i) la couche la plus interne comprenant une polyoléfine cyclique ou un mélange de polymère contenant la polyoléfine cyclique, (ii) une couche intermédiaire, qui est collée sur la couche (i), comprenant une polyoléfine linéaire ou un polyamide, (iii) une seconde couche intermédiaire qui est une couche de polyester ou une couche de polyester comprenant un film mince ayant un dépôt de matériau organique et (iv) la couche la plus externe d'une couche de polyoléfine linéaire sont stratifiées dans cet ordre et la feuille arrière du compartiment contenant un médicament est constituée d'un film multicouche dans lequel (i) la couche la plus interne comprenant une polyoléfine cyclique ou un mélange de polymère contenant la polyoléfine cyclique, (ii) une couche intermédiaire, qui est collée sur la couche (i), comprenant une polyoléfine linéaire ou un polyamide, (v) une feuille de métal, une couche ayant un dépôt de métal ou une couche ayant un dépôt de matériau inorganique et (vi) la couche la plus externe d'une couche de polyester sont stratifiées dans cet ordre.

17. Récipient médical multicouche à plusieurs compartiments selon la revendication 13, dans lequel le compartiment contenant un liquide médical est un article tubulaire constitué d'un film monocouche ou d'un film multicouche comprenant une polyoléfine linéaire.

18. Récipient médical multicouche à plusieurs compartiments selon la revendication 13, dans lequel la partie d'opercule pelable est une partie dans laquelle les couches les plus internes formant le compartiment contenant un médicament et/ou le compartiment contenant le liquide médical sont liées les unes aux autres ou est une partie dans laquelle un élément séparé formé d'un film de résine qui colle légèrement à un film de polyoléfine linéaire et/ou un film de polyoléfine cyclique et la couche la plus interne formant le compartiment contenant le médicament et/ou le compartiment contenant le liquide médical sont liés les uns aux autres.

19. Récipient médical multicouche selon la revendication 13, dans lequel le médicament est un médicament solide.

20. Récipient médical multicouche selon la revendication 13, dans lequel le médicament est un médicament solide choisi dans le groupe comprenant un antibiotique, un agent antibactérien, un agent anti-tumoral et une préparation hormonale.

21. Récipient médical multicouche selon la revendication 13, dans lequel le liquide médical est de l'eau pour injection, une solution saline normale, une solution de glucose, une solution d'acide aminé, une perfusion à forte teneur en calories, une préparation d'émulsion de graisses, une préparation vitaminée ou une préparation d'élément métallique.
